(19) Europäisches Patentamt / European Patent Office / Office européen des brevets

(11) **EP 3 554 028 A1**

(12) **EUROPEAN PATENT APPLICATION**
published in accordance with Art. 153(4) EPC

(43) Date of publication:
**16.10.2019 Bulletin 2019/42**

(51) Int Cl.:
***H04L 25/08*** (2006.01)

(21) Application number: **16925615.3**

(86) International application number:
**PCT/CN2016/113599**

(22) Date of filing: **30.12.2016**

(87) International publication number:
**WO 2018/120062 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **CHEN, Zhaomei**
**Shenzhen**
**Guangdong 518129 (CN)**

• **TU, Jianping**
**Shenzhen**
**Guangdong 518129 (CN)**
• **LIU, Yanru**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **SIGNAL PROCESSING METHOD, NETWORK-SIDE DEVICE, AND CLIENT TERMINAL DEVICE**

(57) Embodiments of the present invention provide a signal processing method, a network-side device, and customer premises equipment. The method includes: determining, by a network-side device in a line initialization phase, information about a dynamic synchronization symbol in a superframe, where the dynamic synchronization symbol is a specified symbol in the superframe, and the information about the dynamic synchronization symbol includes location information of the specified symbol in the superframe and indication information about whether the specified symbol is used as a synchronization symbol or a data symbol; and sending, by the network-side device, a first indication message to CPE, where the first indication message includes the information about the dynamic synchronization symbol in the superframe. In this method, the network-side device uses the specified symbol in the superframe as the dynamic synchronization symbol, that is, a quantity of synchronization symbols is increased, and when a pilot sequence needs to be modulated, the pilot sequence is modulated on the dynamic synchronization symbol, so that modulation time of the pilot sequence is shortened, thereby shortening time for a new join-in wire pair to enter a showtime state, and improving user experience.

Network-side
device

Customer
premises
equipment

S201. Determine, in a line
initialization phase, information
about a dynamic synchronization
symbol in a superframe

S202. First indication
message, including the
information about the
dynamic synchronization
symbol in the superframe

S203. Send the
superframe, and modulate
a pilot sequence on the
dynamic synchronization
symbol in the superframe

S204. Receive the
synchronization symbol at a
location of a specified symbol
based on the location information
that is of the specified symbol in
the superframe and that is
indicated in the first indication
information sent by the network-
side device

Line
initialization
phase

S205. Calculate an error sample

S206. Send the error sample

S207. Calculate a channel and a
cancellation coefficient based on
the error sample

~
TO
FIG. 2B

~
TO
FIG. 2B

FIG. 2A

CONT.
FROM
FIG. 2A
~

CONT.
FROM
FIG. 2A
~

S208. Update the information
about the dynamic
synchronization symbol

S209. Second indication message,
including updated information
about the dynamic
synchronization symbol

S210. Send the superframe, and
modulate the pilot sequence on
the dynamic synchronization
symbol in the superframe

S211. Receive the synchronization
symbol at a location of the symbol
based on location information that
is of the updated dynamic
synchronization symbol in the
superframe and that is indicated in
the second indication information
sent by the network-side device,
calculate the error sample, and
return the error sample to the
network-side device

Showtime
phase

FIG. 2B

2

## Description

## TECHNICAL FIELD

Embodiments of the present invention relate to communications technologies, and in particular, to a signal processing method, a network-side device, and customer premises equipment.

## BACKGROUND

A very-high-data-rate digital subscriber line 2 (Very-high-bit-rate Digital Subscriber Line 2, VDSL2 for short) technology uses frequency division multiplexing to enable a DSL service and a plain old telephone service (Plain Old Telephone Service, POTS for short) to coexist on a same pair of twisted pairs, where the VDSL2 occupies a high frequency band and the POTS occupies a baseband portion below 4 KHz. A DSL access multiplexer (Digital Subscriber Line Access Multiplexer, DSLAM for short) usually provides a plurality of VDSL2 access services for a plurality of customer premises equipments (Customer Premises Equipment, CPE for short). In general, a location of the DSLAM is referred to as a network side or a central office (Central office, CO for short) side; and a location of CPE is referred to as a CPE side or a user side. From a perspective of a network-side device, the network-side device may be referred to as a local device, and the user-side device may be correspondingly referred to as a peer device, and vice versa.

Because the VDSL2 uses a relatively high frequency band, a problem of crosstalk between wires is more prominent, and this causes a decrease in bandwidth per wire pair. Far-end crosstalk (Far-end Crosstalk, FEXT for short) is a main factor affecting VDSL2 system performance.

The vectoring technology is widely used to eliminate the FEXT to increase a broadband rate. The technology estimates a crosstalk channel between wire pairs, and then uses a crosstalk coefficient to perform pre-compensation or noise cancellation for a signal. A focus of the vectoring technology is to estimate FEXT information, specifically: a pilot sequence is modulated on a synchronization symbol, and then feedback information is returned by a receive end. The feedback information may be an error sample or a received signal, and both the error sample and the received signal may be used on the network side to calculate an FEXT cancellation coefficient. When estimating the FEXT cancellation coefficient, a pilot sequence that is sufficiently long is required, a length of the pilot sequence is at least equal to a total quantity of new join-in and showtime wire pairs in the current VDSL2 system, and the pilot sequence can be sent only on symbols at a specific interval.

However, before entering a showtime state, a new join-in wire pair needs to wait until all cancellation coefficients are calculated. Consequently, the new join-in wire pair needs to wait a relatively long time before join-in and showtime. This affects user experience.

## SUMMARY

Embodiments of the present invention provide a signal processing method, a network-side device, and customer premises equipment, so as to resolve a prior-art problem of poor user experience because a new join-in wire pair needs to wait a relatively long time before join-in and showtime.

According to a first aspect, an embodiment of the present invention provides a signal processing method, including:

determining, by a network-side device in a line initialization phase, information about a dynamic synchronization symbol in a superframe, where the dynamic synchronization symbol is a specified symbol in the superframe, and the information about the dynamic synchronization symbol includes location information of the specified symbol in the superframe and indication information about whether the specified symbol is used as a synchronization symbol or a data symbol; and

further sending, by the network-side device, a first indication message to CPE, where the first indication message includes the information about the dynamic synchronization symbol in the superframe.

In this method, the network-side device uses the specified symbol in the superframe as the dynamic synchronization symbol, that is, a quantity of synchronization symbols is increased, and when a pilot sequence needs to be modulated, the pilot sequence is modulated on the dynamic synchronization symbol, so that modulation time of the pilot sequence is shortened, thereby shortening time for a new join-in wire pair to enter a showtime state, and improving user experience.

Further, the network-side device may update the information about the dynamic synchronization symbol, including updating the location information and/or the indication information; and after updating the information about the dynamic synchronization symbol, the network-side device sends a second indication message to the CPE, where the second indication message includes updated information about the dynamic synchronization symbol.

Further, the network-side device may determine a correspondence between the dynamic synchronization symbol and a pilot sequence, where the correspondence is used to indicate a pilot sequence modulated on the dynamic synchronization symbol, or the correspondence is used to indicate a bit in a pilot sequence modulated on the dynamic synchronization symbol.

In an optional manner, the correspondence between the dynamic synchronization symbol and the pilot sequence is that a bit corresponding to a number of the dynamic synchronization symbol is modulated on the dynamic synchronization symbol.

The number of the dynamic synchronization symbol is determined based on a number of a dynamic synchronization symbol in a previous superframe of the superframe to which the dynamic synchronization symbol belongs, the bit is a bit in the pilot sequence, and a number of the bit is a number of the bit in the pilot sequence.

In another optional manner, the correspondence between the dynamic synchronization symbol and the pilot sequence is that at least one pilot sequence corresponding to the location information of the dynamic synchronization symbol is modulated on the dynamic synchronization symbol.

A location of the dynamic synchronization symbol is a location of the dynamic synchronization symbol in the superframe.

Based on determining the correspondence between the dynamic synchronization symbol and the pilot sequence, the network-side device may further carry, in the first indication information, the correspondence between the dynamic synchronization symbol and the pilot sequence, so that the CPE performs signal modulation when an uplink signal is transmitted.

In addition, the foregoing specified symbol includes a symbol at a specific location of at least one subframe in the superframe.

Further, the network-side device may send the second indication message in a line initialization phase or/and a data transmission phase. To be specific, the network-side device may either update the information about the dynamic synchronization symbol in the line initialization phase or update the information about the dynamic synchronization symbol in the data transmission phase.

According to a second aspect, an embodiment of the present invention provides a signal processing method, including:

receiving, by customer premises equipment, an indication message sent by a network-side device, where the indication message includes information about a dynamic synchronization symbol in a superframe, the dynamic synchronization symbol is a specified symbol in the superframe, and the information about the dynamic synchronization symbol includes location information of the specified symbol in the superframe and indication information about whether the specified symbol is used as a synchronization symbol or a data symbol; and
further performing, by the customer premises equipment, information feedback or signal modulation based on the information about the dynamic synchronization symbol in the superframe.

In an optional manner, when performing information feedback or signal modulation based on the information about the dynamic synchronization symbol in the superframe, the customer premises equipment may specifically perform information feedback or signal modulation by using the following method:

if the information about the dynamic synchronization symbol in the superframe indicates that the specified symbol is used as a synchronization symbol, receiving, by the customer premises equipment, the synchronization symbol on the specified symbol in the superframe based on the location information of the specified symbol in the superframe, calculating an error sample or a received signal, and sending the error sample or the received signal to the network-side device.

Further, the indication information includes the correspondence between the dynamic synchronization symbol and the pilot sequence.

The correspondence is that at least one pilot sequence corresponding to the location information of the dynamic synchronization symbol is modulated on the dynamic synchronization symbol.

A location of the dynamic synchronization symbol is a location of the dynamic synchronization symbol in the superframe.

Correspondingly, another optional manner of the performing, by the customer premises equipment, information feedback or signal modulation based on the information about the dynamic synchronization symbol in the superframe is:

if the information about the dynamic synchronization symbol in the superframe indicates that the specified symbol is used as a synchronization symbol, modulating, by the CPE, the pilot sequence based on the location information of the specified symbol in the superframe and the correspondence between the dynamic synchronization symbol and the pilot sequence.

According to a third aspect, an embodiment of the present invention provides a network-side device. The network-side device has functions of implementing the network-side devices in the foregoing method designs. These functions may be implemented by hardware, or may be implemented by hardware by executing corresponding software. The hardware or the software includes one or more modules corresponding to the function.

In a possible design, the network-side device may include a processing module and a sending module, and the processing module and the sending module may perform corresponding functions in the foregoing methods. For example, the processing module is configured to determine, in a line initialization phase, information about a dynamic synchronization symbol in a superframe, where the dynamic synchronization symbol is a specified symbol in the superframe, and the information about the dynamic synchronization symbol includes location information of the specified symbol in the superframe and indication information about whether the specified symbol is used as a synchronization symbol or a data symbol; and the sending module is configured to send a first indication message to customer premises equipment CPE, where the first indication message includes the information about the dynamic synchronization symbol in the superframe.

According to a fourth aspect, an embodiment of the present invention provides customer premises equipment. The customer premises equipment has functions of implementing the customer premises equipment in the foregoing method designs. These functions may be implemented by hardware, or may be implemented by hardware by executing corresponding software. The hardware or the software includes one or more modules corresponding to the function.

In a possible design, the customer premises equipment may include a receiving module and a processing module, and the receiving module and the processing module may perform corresponding functions in the foregoing methods. For example, the receiving module is configured to receive an indication message sent by a network-side device, where the indication message includes information about a dynamic synchronization symbol in a superframe, the dynamic synchronization symbol is a specified symbol in the superframe, and the information about the dynamic synchronization symbol includes location information of the specified symbol in the superframe and indication information about whether the specified symbol is used as a synchronization symbol or a data symbol; and the processing module is configured to perform information feedback or signal modulation based on the information about dynamic synchronization symbols in the superframe.

According to a fifth aspect, an embodiment of the present invention provides a network-side device, and the network-side device includes a memory and a processor. The memory is configured to store a program instruction, and the processor is configured to invoke the program instruction in the memory to implement the method in the first aspect and the implementations thereof.

According to a sixth aspect, an embodiment of the present invention provides customer premises equipment, and the customer premises equipment includes a memory and a processor. The memory is configured to store a program instruction, and the processor is configured to invoke the program instruction in the memory to implement the method in the second aspect and the implementations thereof.

**BRIEF DESCRIPTION OF DRAWINGS**

FIG. 1 is a system architectural diagram of a VDSL2 system;
FIG. 2A and FIG. 2B are an interaction flowchart of a signal processing method in Embodiment 1 according to an embodiment of the present invention;
FIG. 3A and FIG. 3B are an interaction flowchart of a signal processing method in Embodiment 2 according to an embodiment of the present invention;
FIG. 4 is a schematic diagram of a first determined correspondence in a signal processing method according to an embodiment of the present invention;
FIG. 5 is a schematic diagram of a second determined correspondence in a signal processing method according to an embodiment of the present invention;
FIG. 6 is a schematic diagram of a third determined correspondence in a signal processing method according to an embodiment of the present invention;
FIG. 7 is a schematic diagram of a fourth determined correspondence in a signal processing method according to an embodiment of the present invention;
FIG. 8 is a schematic diagram of an application of a signal processing method during out-of-band interference cancellation according to an embodiment of the present invention;
FIG. 9 is a modular structure diagram of a network-side device in Embodiment 1 according to an embodiment of the present invention;
FIG. 10 is a modular structure diagram of customer premises equipment in Embodiment 1 according to an embodiment of the present invention;
FIG. 11 is a physical block diagram of a network-side device in Embodiment 1 according to an embodiment of the present invention; and
FIG. 12 is a physical block diagram of customer premises equipment in Embodiment 1 according to an embodiment of the present invention.

**DESCRIPTION OF EMBODIMENTS**

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

As specified in the current VDSL2 standard, one synchronization symbol is sent when every 256 data symbols (that is, symbols used to carry actual information) are sent. Two profiles are commonly used in VDSL2: 17a and 30a. 17a specifies that evenly sending of 4000 symbols (including data symbols and synchronization symbols) in one second needs to be supported, and 30a specifies that evenly sending of 8000 symbols in one second needs to be supported. Therefore, if a symbol rate of 4000 symbols per second is used, a time interval from sending of one synchronization symbol to sending of a next synchronization symbol is:

$$\frac{1}{4000} \times (256 + 1) = 0.0643 \text{ (s)}$$

When estimating a channel or an FEXT cancellation coefficient, a pilot sequence of sufficient length needs to be used. In practical use, pilot sequences are generally orthogonal, that is, vectors formed by pilot sequences of different wire pairs are perpendicular to each other, so that a channel or the cancellation coefficient is calculated more quickly and conveniently. In addition, to estimate the channel or the cancellation coefficient accurately, the length of the pilot sequence is at least equal to a total quantity of new join-in (Join-in) and showtime (Showtime) wire pairs in the current system. Therefore, to fully and accurately estimate the channel or the cancellation coefficient between wires in the current system, the synchronization symbol needs to be modulated by using at least an orthogonal pilot sequence whose length is equal to a total quantity of wires, that is, the quantity of the synchronization symbols that need to be sent should be equal to the total quantity of lines. For example, when there are 256 wire pairs in the current system, if a symbol rate of 4000 symbol/s is used, a required time interval will be at least

$$\frac{1}{4000} \times (256+1) \times 256 = 16.448 \ (\text{s})$$

In conclusion, time for modulating a pilot sequence by using the prior art is relatively long.

In practical use, before entering a showtime state, the new join-in wire pair in the system needs to wait until all cancellation coefficients are calculated. Before the cancellation coefficient is calculated, the pilot sequence modulation needs to be completed. However, the pilot sequence modulation takes a relatively long time. Consequently, the new join-in wire pair enters the showtime state after a long time. From the perspective of a user, the user needs to wait for a long time to implement line join-in and connect the line to a network, which affects user experience.

In view of the foregoing problem, the embodiments of the present invention provide a signal processing method. In the signal processing method, a specified symbol that is in a superframe and that is sent by a network-side device to a customer premises equipment (Customer Premises Equipment, CPE for short) as a dynamic synchronization symbol is used to adjust a pilot sequence, so that a quantity of synchronization symbols used to modulate the pilot sequence is increased, thereby shortening modulation time of the pilot sequence, shortening time of entering a showtime state by a new join-in wire pair, and improving user experience.

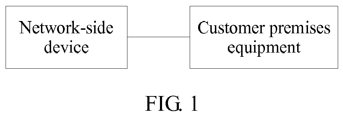

FIG. 1 is a system architectural diagram of a VDSL2 system. As shown in FIG. 1, the VDSL2 system includes a network-side device and CPE, and the network-side device may also be referred to as an office-side device. In an uplink signal transmission direction, the CPE integrates a received DSL signal and a POTS signal, and then sends the integrated DSL signal and the POTS signal to the network-side device. The network-side device separates the received DSL signal and the POTS signal from each other, and then separately outputs the DSL signal and the POTS signal. In a downlink signal transmission direction, the network-side device integrates a received DSL signal and a POTS signal, and then sends the integrated DSL signal and the POTS signal to the CPE. The CPE separates the received DSL signal and the POTS signal from each other, and then separately outputs the DSL signal and the POTS signal.

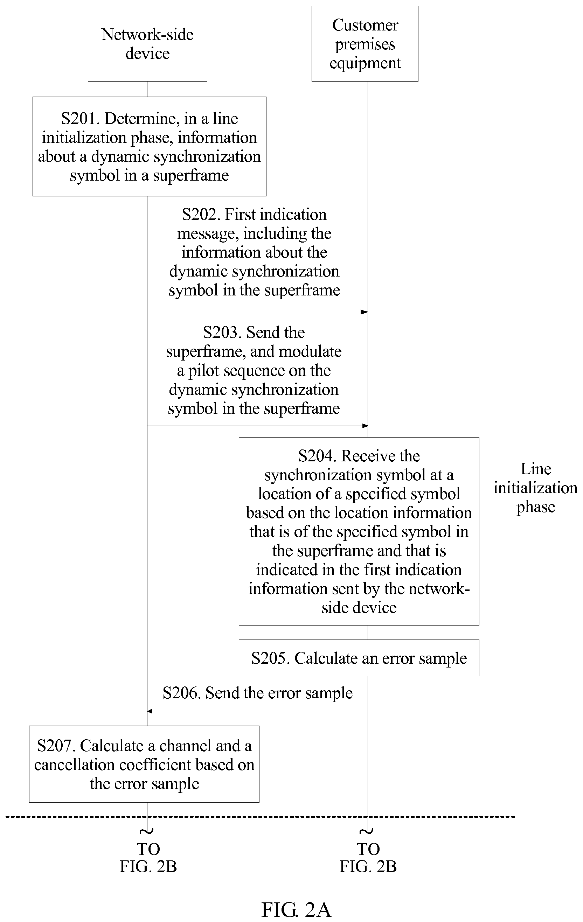

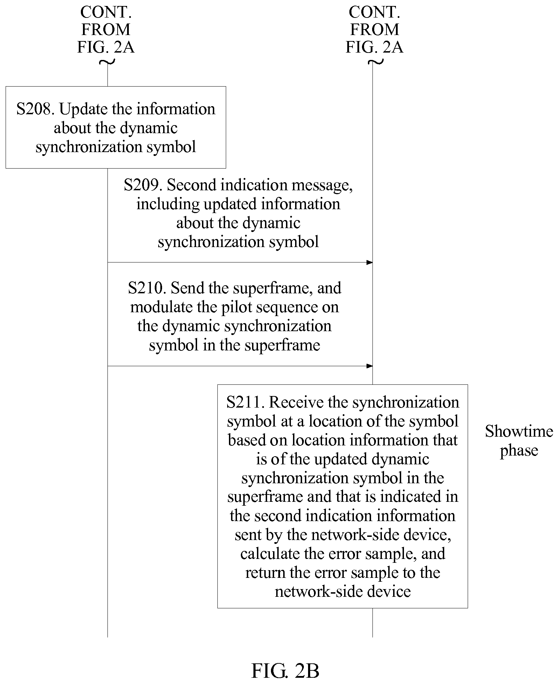

FIG. 2A and FIG. 2B are an interaction flowchart of a signal processing method in Embodiment 1 according to an embodiment of the present invention. The process is an interaction process in a downlink signal transmission direction. As shown in FIG. 1, the method includes the following steps.

S201. A network-side device determines, in a line initialization phase, information about a dynamic synchronization symbol in a superframe.

The dynamic synchronization symbol is a specified symbol in the superframe, and the information about the dynamic synchronization symbol includes location information of the specified symbol in the superframe and indication information about whether the specified symbol is used as a synchronization symbol or a data symbol.

The following first describes the superframe.

In a current VDSL frame structure, a synchronization symbol is sent when every 256 data symbols are sent, and the 256 data symbols and the synchronization symbol constitute a superframe. That is, in the current VDSL frame structure, the synchronization symbol is the last symbol in the superframe.

In this embodiment of the present invention, the network-side device uses some specified symbols in the superframe as dynamic synchronization symbols. To be specific, the network-side device may select some symbols from the superframe, and the symbols may be used as synchronization symbols to modulate a pilot sequence, or may be used as common data symbols to transmit data information.

Specifically, in this step, the network-side device first specifies locations of the dynamic synchronization symbols in the superframe, that is, locations of symbols that are in the superframe and that are used as the synchronization symbols, and specifies whether these dynamic synchronization symbols are currently used as synchronization symbols or as data symbols.

It should be noted that the synchronization symbol specified in the current VDSL frame structure is not changed in this embodiment of the present invention, that is, the original synchronization symbol are still used to modulate the pilot sequence.

In this step, the network-side device indicates that the specified symbol is used as the synchronization symbol because in the following steps, channel training needs to be performed, that is, the pilot sequence needs to be modulated.

S202. The network-side device sends a first indication message to CPE, where the first indication message includes the information about the dynamic synchronization symbol in the superframe.

Optionally, the first indication message may be an O-Signature message defined in a VDSL standard system, that is, the network-side device may use an original message in the VDSL standard system to send the information about the dynamic synchronization symbol, and only the information about the dynamic synchronization symbol needs to be added to the O-Signature.

Alternatively, the foregoing first indication message may be another message. For example, in this embodiment of the present invention, a new message may be defined, and it is assumed that the new message is an O-Dynamic message, where the message is used to carry the information about the dynamic synchronization symbol.

For example, the network-side device may represent the information about the dynamic synchronization symbol by adding a "dynamic sync symbol index" parameter and a "dynamic sync symbol enable" parameter to the first indication message, where the "dynamic sync symbol index" parameter indicates the location of the specified symbol in the superframe, and the "dynamic sync symbol enable" parameter indicates whether the specified symbol is used as a synchronization symbol. When a value of the "dynamic sync symbol enable" parameter is "enable", it indicates that the specified symbol is used as a synchronization symbol, and when the value of the "dynamic sync symbol enable" parameter is "disable", it indicates that the specified symbol is used as a data symbol rather than a synchronization symbol.

After receiving the first indication information, the CPE saves the information about the dynamic synchronization symbol indicated in the first indication information for subsequent signal modulation.

S203. The network-side device sends the superframe to the CPE, and modulates a pilot sequence on the foregoing determined dynamic synchronization symbol in the superframe.

S204. The CPE receives the synchronization symbol at a location of the specified symbol based on the location information that is of the specified symbol in the superframe and that is indicated in the first indication information sent by the network-side device.

S205. The CPE calculates an error sample.

S206. The CPE sends the foregoing error sample to the network-side device.

It should be noted that information returned by the CPE to the network-side device may be an error sample or a received signal, and both the error sample and the received signal may be used by the network side to calculate a channel and a cancellation coefficient. In this embodiment, the error sample is used as an example for description.

S207. The network-side device calculates a channel and a cancellation coefficient based on the error sample.

After the network side calculates the channel and the cancellation coefficient, the line initialization is complete, that is, entering a showtime phase.

After the showtime phase is entered, a symbol that is originally used as a dynamic synchronization symbol can be restored to a data transmission symbol; or after being restored to the data transmission symbol, the symbol is used for pilot sequence modulation in the showtime phase again; or the network-side device may redetermine a new dynamic synchronization symbol and perform pilot sequence modulation in the showtime phase.

Case 1:

If the dynamic synchronization symbol needs to be restored to the data transmission symbol in the showtime phase, the network-side device may send an indication message to the CPE again, to indicate, in the indication message, that the dynamic synchronization symbol is not used as a synchronization symbol.

Case 2:

If the dynamic synchronization symbol needs to be used for pilot sequence modulation in the showtime phase again after being restored to the data transmission symbol, the network-side device may also send an indication message to the CPE again, to indicate, in the indication message, that the dynamic synchronization symbol is used as a synchronization symbol.

Case 3:

If the network-side device needs to redetermine a new dynamic synchronization symbol and perform pilot sequence modulation in the showtime phase, that is, the network side wants to use a symbol different from that in the line initialization phase as a synchronization symbol, the network-side device may first update the information about the dynamic synchronization symbol, and then send updated information about the dynamic synchronization symbol to the CPE by using an indication message.

That is, in all the foregoing three cases, the network-side device needs to send an indication message to the CPE again to indicate the information about the dynamic synchronization symbol. For example, the indication message may be the O-Dynamic message newly defined in the foregoing embodiment of the present invention, and a parameter carried in the message may be the same as the parameter in the first indication message in step S102, and only a parameter value is modified.

The following step S208 and subsequent steps are steps specific to the third case, and in the other two cases, the network-side device carries only a new parameter value when sending the indication message, and details are not described below.

S208. The network-side device updates the information about the dynamic synchronization symbol.

Specifically, the network-side device may update the location information of the specified symbol in the superframe, and/or the indication information about whether the specified symbol is used as a synchronization symbol or as a data symbol.

S209. The network-side device sends a second indication message to the CPE, where the second indication message includes updated information about the dynamic synchronization symbol.

For example, the second indication message may be the foregoing O-Dynamic message, and the network-side device carries the information about the dynamic synchronization symbol by using the "dynamic sync symbol index" parameter and the "dynamic sync symbol enable" parameter in the O-Dynamic message.

In this step, because the network-side device needs to redetermine the new dynamic synchronization symbol and perform pilot sequence modulation, the network-side device specifies the location information of the new dynamic synchronization symbol in the "dynamic sync symbol index" parameter, and specifies the dynamic synchronization symbol as the synchronization symbol in the "dynamic sync symbol enable" parameter, that is, sets the "dynamic sync symbol enable" parameter value to "enable".

After receiving the second indication message, the CPE saves the parameter value in the message for subsequent pilot sequence modulation.

It should be noted that, in addition to sending the second indication message in the showtime phase, the network-side device may send the second indication message in the line initialization phase; that is, the network-side device may also update the information about the dynamic synchronization symbol in the line initialization phase.

S210. The network-side device sends the superframe to the CPE, and modulates the pilot sequence on the foregoing updated dynamic synchronization symbol in the superframe.

S211. The CPE receives the synchronization symbol at a location of the symbol based on location information that is of the updated dynamic synchronization symbol in the superframe and that is indicated in the second indication information sent by the network-side device, calculates the error sample, and returns the error sample to the network-side device.

In this embodiment, the network-side device uses the specified symbol in the superframe as the dynamic synchronization symbol, and when a pilot sequence needs to be modulated, the pilot sequence is modulated on the dynamic synchronization symbol, so that modulation time of the pilot sequence is shortened, thereby shortening time for a new join-in wire pair to enter a showtime state, and improving user experience.

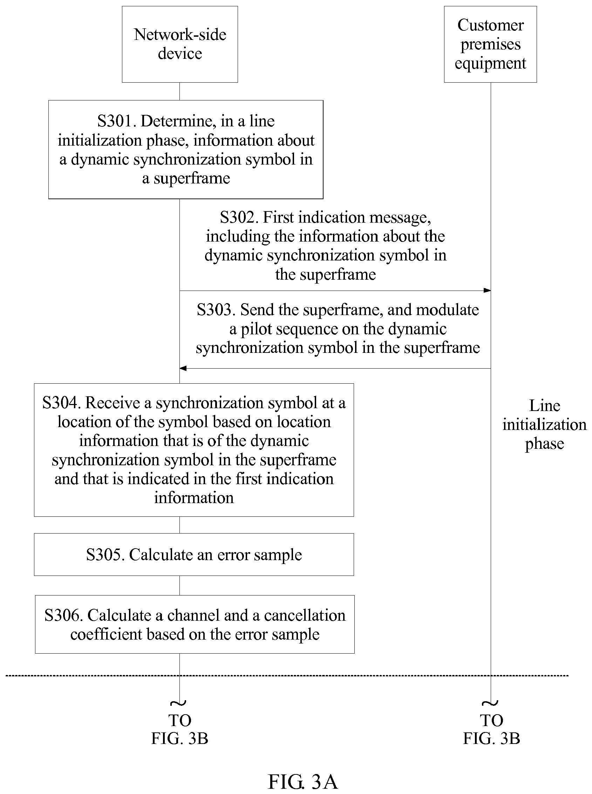

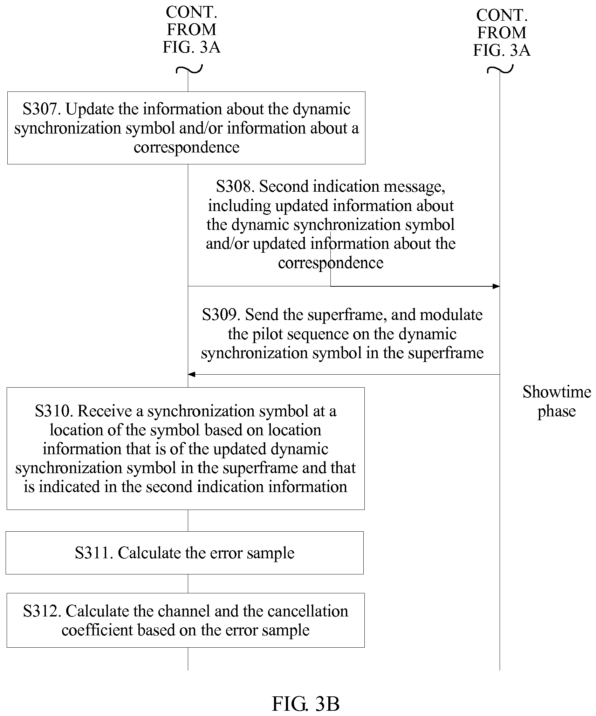

FIG. 3A and FIG. 3B are an interaction flowchart of a signal processing method in Embodiment 2 according to an embodiment of the present invention. The process is an interaction process in an uplink signal transmission direction. As shown in FIG. 1, the method includes the following steps.

S301. A network-side device determines, in a line initialization phase, information about a dynamic synchronization symbol in a superframe.

A specific process is the same as that in the foregoing step S201. Reference may be made to the foregoing step S201, and details are not described herein again.

In this step, the network-side device determines that the specified symbol is used as the synchronization symbol because in the following steps, channel training needs to be performed, that is, the pilot sequence needs to be modulated.

S302. The network-side device sends a first indication message to CPE, where the first indication message includes the information about the dynamic synchronization symbol in the superframe.

For an uplink signal transmission direction, in addition to the information about the dynamic synchronization symbol in the superframe, the first indication information sent by the network-side device to the CPE may need to include a correspondence between a dynamic synchronization symbol and a pilot sequence; that is, the CPE needs to be notified of specific pilot sequences that needs to be modulated at a specific location during pilot sequence modulation. However, for a downlink signal transmission direction, the CPE does not need to perform modulation, and only needs to know specific symbols on which modulation signals are received. Therefore, in the downlink signal transmission direction, the network-side device does not need to send information about the foregoing correspondence to the CPE.

The correspondence between a dynamic synchronization symbol and a pilot sequence is described in detail in the following embodiment.

After receiving the first indication information, the CPE saves the information about the dynamic synchronization symbol indicated in the first indication information for subsequent signal modulation.

S303. The CPE sends the superframe to the network side, and modulates a pilot sequence on the foregoing determined dynamic synchronization symbol in the superframe.

The CPE modulates the pilot sequence based on location information that is of the foregoing specified symbol in the superframe and that is indicated in the first indication message and the correspondence between the dynamic synchronization symbol and the pilot sequence.

Specifically, the CPE modulates, based on the location information of the dynamic synchronization symbol, the pilot sequence corresponding to the dynamic synchronization symbol on the dynamic synchronization symbol.

S304. The network-side device receives a synchronization symbol at a location of the symbol based on location information of the foregoing determined dynamic synchronization symbol in the superframe.

S305. The network-side device calculates an error sample.

S306. The network-side device calculates a channel and a cancellation coefficient based on the error sample.

It should be noted that the network side may calculate the channel and the cancellation coefficient by using an error sample or a received signal. In this embodiment, the error sample is used as an example for description.

The network side calculates the channel and the cancellation coefficient to complete the line initialization phase and enter a data transmission phase, which is a showtime phase.

After the showtime phase is entered, a symbol that is originally used as a dynamic synchronization symbol can be restored to a data transmission symbol; or after being restored to the data transmission symbol, the symbol is used for pilot sequence modulation in the showtime phase again; or the network-side device may redetermine a new dynamic synchronization symbol and perform pilot sequence modulation in the showtime phase.

Case 1:

If the dynamic synchronization symbol needs to be restored to the data transmission symbol in the showtime phase, the network-side device may send an indication message to the CPE again, to indicate, in the indication message, that the dynamic synchronization symbol is not used as a synchronization symbol.

Case 2:

If the dynamic synchronization symbol needs to be used for pilot sequence modulation in the showtime phase again after being restored to the data transmission symbol, the network-side device may also send an indication message to the CPE again, to indicate, in the indication message, that the dynamic synchronization symbol is used as a synchronization symbol.

Case 3:

If the network-side device needs to redetermine a new dynamic synchronization symbol and perform pilot sequence modulation in the showtime phase, that is, the network side wants to use a symbol different from that in the line initialization phase as a synchronization symbol, or the network side wants to change the correspondence between the dynamic synchronization symbol and the pilot sequence, the network-side device may first update the information about the dynamic synchronization symbol and/or the information about the correspondence, and then send updated information about the dynamic synchronization symbol and/or updated information about the correspondence to the CPE by using an indication message.

The following step S307 and subsequent steps are steps specific to the third case, and in the other two cases, the network-side device carries only a new parameter value when sending the indication message, and details are not described below.

S307. The network-side device updates the information about the dynamic synchronization symbol and/or information about a correspondence.

Specifically, the network-side device may update the location information of the specified symbol in the superframe, and/or the indication information about whether the specified symbol is used as a synchronization symbol or as a data symbol, and/or the information about the correspondence between the dynamic synchronization symbol and the pilot sequence.

S308. The network-side device sends a second indication message to the CPE, where the second indication message includes updated information about the dynamic synchronization symbol and/or updated information about the correspondence.

For example, the second indication message may be the foregoing O-Dynamic message. The network-side device carries the information about the dynamic synchronization symbol by using a "dynamic sync symbol index" parameter and a "dynamic sync symbol enable" parameter in the O-Dynamic message. In addition, the network-side device may carry the information about the correspondence between the dynamic synchronization symbol and the pilot sequence by using an Upstream sync symbol pilot sequence parameter in the O-Dynamic message.

After receiving the second indication message, the CPE saves the parameter value in the message for subsequent pilot sequence modulation.

It should be noted that, in addition to sending the second indication message in the showtime phase, the network-side device may send the second indication message in the line initialization phase; that is, the network-side device may also update the information about the dynamic synchronization symbol in the line initialization phase.

S309. The CPE sends the superframe to the network side, and modulates the pilot sequence on the foregoing updated dynamic synchronization symbol in the superframe.

S310. The network-side device receives the synchronization symbol at the location of the symbol based on location information of the foregoing updated dynamic synchronization symbol in the superframe.

S311. The network-side device calculates the error sample.

S312. The network-side device calculates the channel and the cancellation coefficient based on the error sample.

In this embodiment, the network-side device uses the specified symbol in the superframe as the dynamic synchronization symbol, and notifies the CPE of the information about the dynamic synchronization symbol, and when the CPE needs to modulate the pilot sequence, the CPE modulates the pilot sequence on the dynamic synchronization symbol, so that modulation time of the pilot sequence is shortened, thereby shortening time for a new join-in wire pair to enter a showtime state, and improving user experience.

The following embodiment describes the correspondence between the dynamic synchronization symbol and the pilot sequence.

In the foregoing step S201 and step S301, the network-side device determines the dynamic synchronization symbol in the superframe, that is, the information about the specified symbol in the superframe, including the location information of the specified symbol in the superframe, and the information about whether the specified symbol is used as a synchronization symbol or a data symbol. In addition, when these specified symbols are used for pilot sequence modulation, specific symbols to be used for modulation and specific pilot sequences to be modulated need to be determined, that is, the correspondence between the dynamic synchronization symbol and the pilot sequence needs to be determined. The correspondence is used to indicate the pilot sequence modulated on the dynamic synchronization symbol, or the correspondence is used to indicate a bit in the pilot sequence modulated on the dynamic synchronization symbol.

The network-side device may determine the correspondence in any one of the following four manners.

Manner 1:

The correspondence that is between the dynamic synchronization symbol and the pilot sequence and that is determined by the network-side device is that a bit corresponding to a number of the dynamic synchronization symbol is modulated on the dynamic synchronization symbol.

The number of the dynamic synchronization symbol is determined based on a number of a dynamic synchronization symbol in a previous superframe of the superframe to which the dynamic synchronization symbol belongs, the bit is a bit in the pilot sequence, and a number of the bit is a number of the bit in the pilot sequence.

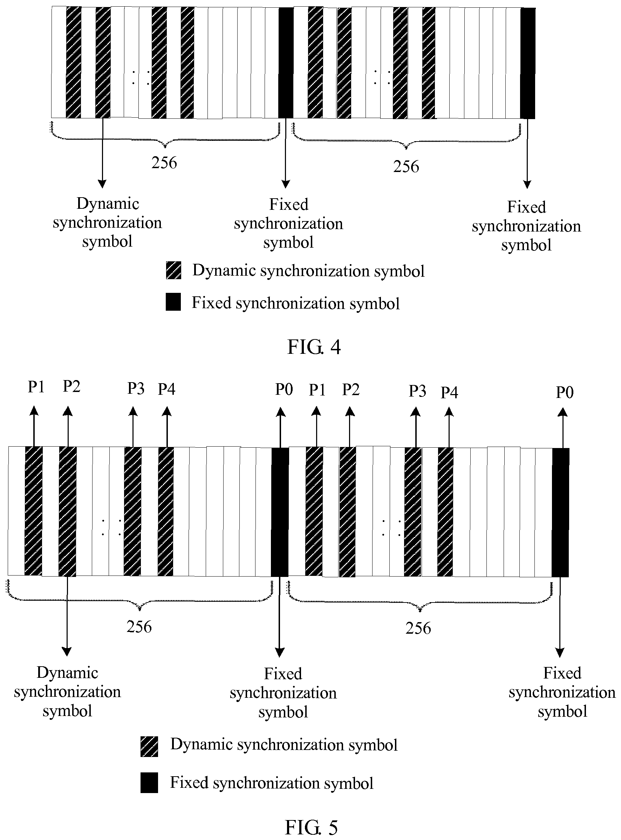

Specifically, FIG. 4 is a schematic diagram of a first determined correspondence in a signal processing method according to an embodiment of the present invention. As shown in FIG. 4, the network-side device selects a specific quantity of symbols (four symbols are selected in FIG. 4) at a same location of each superframe as the dynamic synchronization symbol. Further, it is assumed that a length of the pilot sequence is k, and numbers are from 0 to k-1. Starting with a first superframe, all dynamic synchronization symbols and original fixed synchronization symbols are numbered; and also starting with 0, each bit in the pilot sequence is modulated onto a synchronization symbol that has a same number as that of the bit. That is, a first bit in the pilot sequence is modulated onto a first synchronization symbol, a second bit in the pilot sequence is modulated onto a second synchronization symbol, and so on.

That is, after the dynamic synchronization symbols and the fixed synchronization symbols in all superframes are uniformly numbered, a one-to-one correspondence is established between the dynamic synchronization symbols and the fixed synchronization symbols and the bits in the pilot sequence respectively.

It should be noted that, when the synchronization symbol corresponds to the bit in the pilot sequence based on the number, the synchronization symbol may be corresponding to a bit in the pilot sequence that has a same number as that of the synchronization symbol; or the synchronization symbol may be corresponding to the bit in the pilot sequence based on a specific offset, for example, a synchronization symbol numbered 0 is corresponding to a bit numbered 3, a synchronization symbol numbered 1 is corresponding to a bit numbered 4, and so on.

The following analyzes modulation results in this manner.

Assuming that a quantity of wire pairs for channel training is 256, if the current VDSL frame structure is used, 256 superframes are required to complete the pilot sequence modulation, and the time required is:

$$\frac{1}{4000} \times (256+1) \times 256 = 16.448 \text{ (s)}$$

If the pilot sequence is modulated based on the correspondence in manner 1, dynamic synchronization symbols in each superframe are sequentially used for the pilot sequence modulation, and each superframe has a total of 5 synchronization symbols (4 dynamic synchronization symbols and 1 fixed synchronization symbol), only 256/5 = 52 superframes are required to complete the pilot sequence modulation, and the time required is:

$$\frac{1}{4000} \times (256+1) \times 52 = 3.341(\text{s})$$

That is, time for modulating the pilot sequence based on the correspondence in manner 1 is reduced by 80%. As a quantity of dynamic synchronization symbols increases, the time is reduced more significantly.

It should be noted that, when the correspondence in manner 1 is established, the correspondence between the dynamic synchronization symbol and the bit in the pilot sequence is established, and therefore, even in an uplink direction, the CPE only modulates the bit in the pilot sequence according to a location sequence of the pilot sequence. Therefore, the network device does not need to notify the CPE of the correspondence in the uplink direction.

Manner 2:

The correspondence that is between the dynamic synchronization symbol and the pilot sequence and that is determined by the network-side device is that at least one pilot sequence corresponding to the location information of the dynamic synchronization symbol is modulated on the dynamic synchronization symbol.

A location of the dynamic synchronization symbol is a location of the dynamic synchronization symbol in the superframe.

Specifically, FIG. 5 is a schematic diagram of a second determined correspondence in a signal processing method according to an embodiment of the present invention. As shown in FIG. 5, the network-side device selects a specific quantity of symbols (four symbols are selected in FIG. 5) at a same location of each superframe as the dynamic synchronization symbol. The selected dynamic synchronization symbols are respectively marked with locations P1, P2, P3, and P4, and the original fixed synchronization symbols are marked with location P0. Further, one or a group of pilot sequences are modulated separately on synchronization symbols at different locations.

The following analyzes modulation results in this manner.

Assuming that a quantity of wire pairs for channel training is 256, these wire pairs are grouped into five groups, and are respectively marked as L0, L1, L2, L3, and L4. A grouping method can be selected freely. In an example in which the quantities of wire pairs are averaged among all the five groups, a maximum quantity of wire pairs per group is 52. Wire pair L0 in group 1 is used to modulate the pilot sequence on a synchronization symbol P0 at location 0, wire pair L1 in group 2 is used to modulate the pilot sequence on a synchronization symbol P1 at location 1, and by analogy, a wire pair in each group is used to modulate the pilot sequence on a synchronization symbol at a location that has a same number as that of the synchronization symbol. Because the maximum quantity of wire pairs per group is 52, the length of the pilot sequence is required to be 64 (the length of the pilot sequence is a power of 2 and that is greater than the maximum quantity of wire pairs, and a power of 2 that is closest to 52 is 64). That is, based on this correspondence, the length of the pilot sequence is also reduced.

If the current VDSL frame structure is used, 256 superframes are required to complete the pilot sequence modulation, and the time required is:

$$\frac{1}{4000} \times (256+1) \times 256 = 16.448 \ (s)$$

However, based on the correspondence in manner 2, the wire pairs are grouped into five groups, and the pilot sequences are respectively modulated by using synchronization symbols at different locations. Time consumption is:

$$\frac{1}{4000} \times (256+1) \times 64 = 4.112(s)$$

The time for modulating the pilot sequence in manner 2 is reduced by 75% when compared with use of the current VDSL frame structure.

It should be noted that, in the correspondence in manner 2, a synchronization symbol at a specific location can be used for modulating only a corresponding pilot sequence. Therefore, in the uplink direction, the CPE needs to know the correspondence to ensure that the CPE modulates the corresponding pilot sequence on a correct synchronization symbol when modulating the pilot sequence in the uplink direction. Therefore, in manner 2, the network-side device needs to carry, in the first indication message sent to the CPE, the correspondence between the dynamic synchronization symbol and the pilot sequence, or may update the correspondence between the dynamic synchronization symbol and the pilot sequence in the subsequent second indication message.

Manner 3:

The correspondence that is between the dynamic synchronization symbol and the pilot sequence and that is determined by the network-side device is that a bit corresponding to a number of the dynamic synchronization symbol is modulated on the dynamic synchronization symbol.

The number of the dynamic synchronization symbol is determined based on a number of a dynamic synchronization symbol in a previous superframe of the superframe to which the dynamic synchronization symbol belongs, the bit is a bit in the pilot sequence, and a number of the bit is a number of the bit in the pilot sequence.

In addition, the dynamic synchronization symbol, that is, the specified symbol in the superframe, includes a symbol at a specific location in at least one subframe in the superframe. To be specific, in manner 3, the correspondence between the dynamic synchronization symbol and the pilot sequence is established in a unit of a subframe.

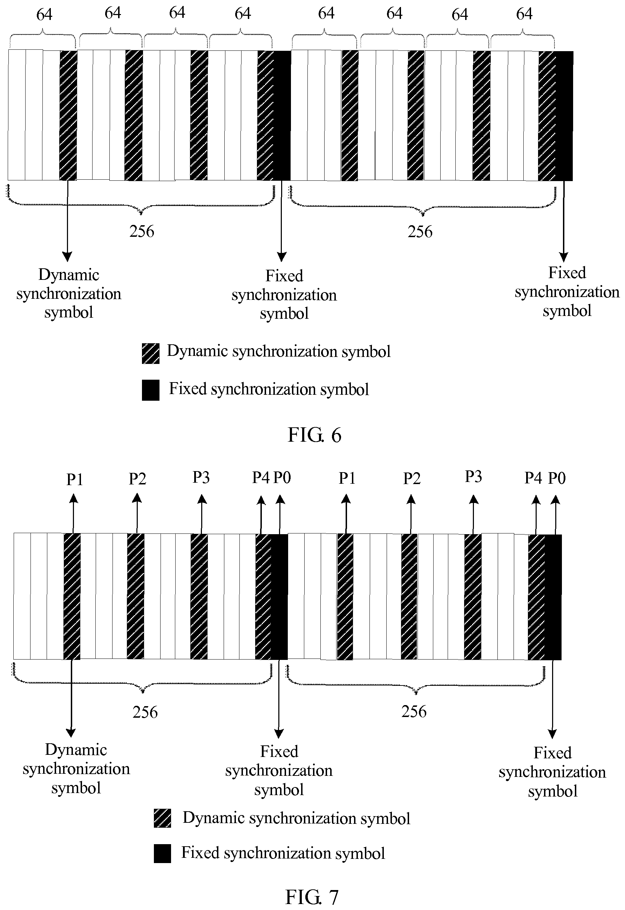

Specifically, FIG. 6 is a schematic diagram of a third determined correspondence in a signal processing method according to an embodiment of the present invention. As shown in FIG. 6, the network-side device divides 256 symbols in a superframe into n (n is a divider of 256) subframes, where a quantity of symbols in each subframe is 256/n. n = 4 is used as an example for description, and the quantity of symbols in each subframe is 64. Among the 64 symbols in each sub frame, k symbols at a same location are selected as the dynamic synchronization symbols. In this embodiment, k = 1 is used as an example for description. It is assumed that a length of the pilot sequence is k, and numbers are from 0 to k-1. Starting with a first superframe, all dynamic synchronization symbols and original fixed synchronization symbols are numbered; and also starting with 0, each bit in the pilot sequence is modulated onto a synchronization symbol that has a same number as that of the bit. That is, a first bit of the pilot sequence is modulated onto a first synchronization symbol, and so on.

The following analyzes modulation results in this manner.

Assuming that a quantity of wire pairs for channel training is 256, if the current VDSL frame structure is used, 256 superframes are required to complete the pilot sequence modulation, and the time required is:

$$\frac{1}{4000} \times (256+1) \times 256 = 16.448 \text{ (s)}$$

However, based on the correspondence in manner 3, synchronization symbols in each superframe are sequentially used for the pilot sequence modulation, and each superframe has a total of 5 synchronization symbols (4 dynamic synchronization symbols and 1 fixed synchronization symbol), only 256/5 = 51 superframes plus one subframe are required to complete the pilot sequence modulation, and the time required is:

$$\frac{1}{4000} \times (256+1) \times 51 + \frac{1}{4000} \times 64 = 3.293 \text{(s)}$$

The time for modulating the pilot sequence in manner 3 is reduced by 80% when compared with use of the current VDSL frame structure. As a quantity of dynamic synchronization symbols increases, the time is reduced more significantly.

It should be noted that, when the correspondence in manner 3 is used, the correspondence between the dynamic synchronization symbol and the bit in the pilot sequence is established, and therefore, even in an uplink direction, the CPE only modulates the bit in the pilot sequence according to a location sequence of the pilot sequence. Therefore, the network device does not need to notify the CPE of the correspondence in the uplink direction.

Manner 4:

The correspondence that is between the dynamic synchronization symbol and the pilot sequence and that is determined by the network-side device is that at least one pilot sequence corresponding to the location information of the dynamic synchronization symbol is modulated on the dynamic synchronization symbol.

A location of the dynamic synchronization symbol is a location of the dynamic synchronization symbol in the superframe.

In addition, the dynamic synchronization symbol, that is, the specified symbol in the superframe, includes a symbol at a specific location in at least one subframe in the superframe. To be specific, in manner 4, the correspondence between the dynamic synchronization symbol and the pilot sequence is established in a unit of a subframe.

Specifically, FIG. 7 is a schematic diagram of a fourth determined correspondence in a signal processing method according to an embodiment of the present invention. As shown in FIG. 7, the network-side device divides 256 symbols in a superframe into n (n is a divider of 256) subframes, where a quantity of symbols in each subframe is 256/n. n = 4 is used as an example for description, and the quantity of symbols in each subframe is 64. Among the 64 symbols in each subframe, k symbols at a same location are selected as the dynamic synchronization symbols. In this embodiment, k = 1 is used as an example for description. The dynamic synchronization symbols are respectively marked with locations P1, P2, P3, and P4, and the original fixed synchronization symbols are marked with location P0. Synchronization symbols at different locations are respectively used for modulating a pilot sequence, and the pilot sequences modulated at all locations may be the same or different.

The following analyzes modulation results in this manner.

Assuming that a quantity of wire pairs for channel training is 256, these wire pairs are grouped into five groups, and are respectively marked as L0, L1, L2, L3, and L4. A grouping method can be selected freely. In an example in which the quantities of wire pairs are averaged among all the five groups, a maximum quantity of wire pairs per group is 52. Wire pair L0 in group 1 is used to modulate the pilot sequence on a synchronization symbol P0 at location 0, and by analogy, a wire pair in each group is used to modulate the pilot sequence on a synchronization symbol at a location that has a same number as that of the synchronization symbol. Because the maximum quantity of wire pairs per group is 52, the length of the pilot sequence is required to be 64 (the length of the pilot sequence is a power of 2 and that is greater than the maximum quantity of wire pairs, and a power of 2 that is closest to 52 is 64).

If the current VDSL frame structure is used, 256 superframes are required to complete the pilot sequence modulation, and the time required is:

$$\frac{1}{4000} \times (256+1) \times 256 = 16.448 \text{ (s)}$$

However, based on the correspondence in manner 3, the wire pairs are grouped into five groups, and the pilot sequences are respectively modulated by using synchronization symbols at different locations. Time consumption is:

$$\frac{1}{4000} \times (256+1) \times 64 = 4.112(s)$$

The time for modulating the pilot sequence in manner 3 is reduced by 75% when compared with use of the current VDSL frame structure.

It should be noted that, in the correspondence in manner 4, a synchronization symbol at a specific location can be used for modulating only a corresponding pilot sequence. Therefore, in the uplink direction, the CPE needs to know the correspondence to ensure that the CPE modulates the corresponding pilot sequence on a correct synchronization symbol when modulating the pilot sequence in the uplink direction. Therefore, in manner 4, the network-side device needs to carry, in the first indication message sent to the CPE, the correspondence between the dynamic synchronization symbol and the pilot sequence, or may update the correspondence between the dynamic synchronization symbol and the pilot sequence in the subsequent second indication message.

The following embodiment describes a scenario in which the dynamic synchronization symbol is applied to resolve out-of-band interference.

When a product based on profile 17a and a product based on profile 35b coexist in the VDSL system, a service based on the profile 17a uses a frequency band of 0-17.6 MHz, and a service based on the profile 35b uses a frequency band of 0-35.2 MHz. The two frequency bands overlap, and the following crosstalk scenario may exist.

VDSL2 has out-of-band mirror signals between 17M and 35M. Although most of the mirror signals can be filtered out through a filter, some out-of-band mirror signals are still not filtered out between 17M and 21M, and VDSL2 out-of-band mirror signals cause mutual interference with 17M-35M.

In this embodiment, channel training of a leaked frequency band can be accomplished by using the foregoing dynamic synchronization symbol method, thereby achieving ideal performance through crosstalk cancellation.

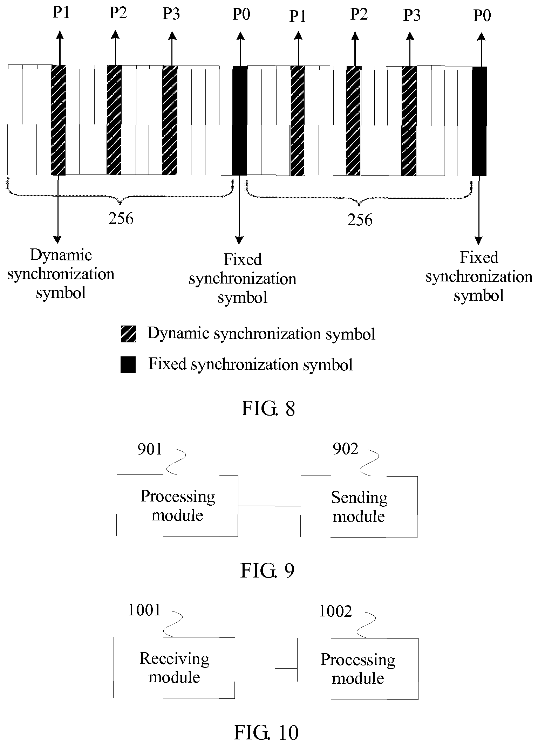

Specifically, FIG. 8 is a schematic diagram of an application of a signal processing method during out-of-band interference cancellation according to an embodiment of the present invention. As shown in FIG. 8, assuming that there are 17a wire pairs and 35b wire pairs in a system, three symbols at a same location may be selected in each superframe as dynamic synchronization symbols, where the locations are P1, P2, and P3, and a location of an original fixed synchronization symbol is P0. Wire pairs are grouped into 2 groups: 17a wire pairs and 35b wire pairs.

Synchronization symbols at the location P0 are used to estimate intra-group channels of the 17a wire pairs, synchronization symbols at the location P1 are used to estimate intra-group channels of the 35b wire pairs, and synchronization symbols at the locations P2 and P3 are used to estimate channels between the 17a wire pairs and 35b wire pairs.

(1) At location P0, the 17a wire pairs are used to modulate a normal pilot sequence, and a synchronization symbol of the 35b wire pair keeps silent, that is, does not send a signal. In this case, there is no crosstalk noise between the 35b wire pairs and the 17a wire pairs, and channel estimation between the 17a wire pairs is completed.

(2) At location P1, the 35b wire pairs are used to modulate a normal pilot sequence, and a synchronization symbol of the 17a wire pairs keeps silent, and channel estimation between the 35b wire pairs is completed.

(3) at locations P2 and P3, both the 17a wire pairs and the 35b wire pairs are used to modulate a pilot sequence.

In one manner, different bits of a same pilot sequence are modulated at locations P2 and P3. It is assumed that a length of the pilot sequence is k, and numbers are from 0 to k-1. All synchronization symbols at locations P2 and P3 are numbered from 0 to k-1, and a bit of each pilot sequence is modulated onto a synchronization symbol that has a same number as that of the pilot sequence. To be specific, a channel estimation between the 17a wire pairs and the 35b wire pairs is completed by increasing the synchronization symbol to reduce training time.

In another manner, at locations P2 and P3, both the 17a wire pairs and the 35b wire pairs are used to modulate a pilot sequence. 17a wire pairs at location P2 are used to modulate a normal pilot sequence (without using an "all ones" vector), and the 35b wire pairs are used to send an "all ones" sequence, so as to complete the channel training from the 17a wire pairs to the 35b wire pairs; or the 35b wire pairs at location P3 are used to modulate a normal pilot sequence, and the 17a wire pairs are used to send an "all ones" sequence (without using an "all ones" vector), so as to complete the channel training from the 35b wire pairs to the 17a wire pairs. In this method, the length of the pilot sequence is reduced, and the 35b wire pairs may be processed as two wire pairs: a high-frequency wire pair and a low-frequency wire pair that are separated at a frequency of 17 MHz, so as to better resolve a problem that the length of the pilot sequence that currently has a relatively large quantity of wire pairs and that is defined by a system standard is insufficient.

For a specific processing procedure in this scenario, refer to the foregoing embodiments, and details are not described herein.

FIG. 9 is a modular structure diagram of a network-side device in Embodiment 1 according to an embodiment of the present invention. As shown in FIG. 9, the network-side device includes:

a processing module 901, configured to determine, in a line initialization phase, information about a dynamic synchronization symbol in a superframe, where the dynamic synchronization symbol is a specified symbol in the superframe, and the information about the dynamic synchronization symbol includes location information of the specified symbol in the superframe and indication information about whether the specified symbol is used as a synchronization symbol or a data symbol; and
a sending module 902, configured to send a first indication message to CPE, where the first indication message includes the information about the dynamic synchronization symbol in the superframe.

The network-side device is configured to implement the foregoing method embodiments. Implementation principles and technical effects of the network-side device are similar to those of the method embodiments. Details are not described herein again.

In another embodiment, the processing module 901 is further configured to:
update the information about the dynamic synchronization symbol.

Correspondingly, the sending module 902 is further configured to:
after the processing module 901 updates the information about the dynamic synchronization symbol, send a second indication message to the CPE, where the second indication message includes updated information about the dynamic synchronization symbol, and the updating the information about the dynamic synchronization symbol includes updating the location information and/or the indication information.

In another embodiment, the processing module 901 is further configured to:
determine a correspondence between the dynamic synchronization symbol and a pilot sequence, where the correspondence is used to indicate a pilot sequence modulated on the dynamic synchronization symbol, or the correspondence is used to indicate a bit in a pilot sequence modulated on the dynamic synchronization symbol.

In another embodiment, the correspondence between the dynamic synchronization symbol and the pilot sequence is that a bit corresponding to a number of the dynamic synchronization symbol is modulated on the dynamic synchronization symbol.

The number of the dynamic synchronization symbol is determined based on a number of a dynamic synchronization symbol in a previous superframe of the superframe to which the dynamic synchronization symbol belongs, the bit is a bit in the pilot sequence, and a number of the bit is a number of the bit in the pilot sequence.

In another embodiment, the correspondence between the dynamic synchronization symbol and the pilot sequence is that at least one pilot sequence corresponding to the location information of the dynamic synchronization symbol is modulated on the dynamic synchronization symbol.

A location of the dynamic synchronization symbol is a location of the dynamic synchronization symbol in the superframe.

In another embodiment, the foregoing first indication information further includes the correspondence between the dynamic synchronization symbol and the pilot sequence.

In another embodiment, the foregoing specified symbol includes a symbol at a specific location of at least one subframe in the superframe.

In another embodiment, the network-side device sends the second indication message in the line initialization phase and/or a data transmission phase.

FIG. 10 is a modular structure diagram of customer premises equipment in Embodiment 1 according to an embodiment of the present invention. As shown in FIG. 10, the customer premises equipment includes:

a receiving module 1001, configured to receive an indication message sent by a network-side device, where the indication message includes information about a dynamic synchronization symbol in a superframe, the dynamic synchronization symbol is a specified symbol in the superframe, and the information about the dynamic synchronization symbol includes location information of the specified symbol in the superframe and indication information about whether the specified symbol is used as a synchronization symbol or a data symbol; and
a processing module 1002, configured to perform information feedback or signal modulation based on the information about the dynamic synchronization symbol in the superframe.

The customer premises equipment is configured to implement the foregoing method embodiments. Implementation principles and technical effects of the customer premises equipment are similar to those of the method embodiments. Details are not described herein again.

In another embodiment, the processing module 1002 is specifically configured to:
if the information about the dynamic synchronization symbol in the superframe indicates that the specified symbol is used as a synchronization symbol, receive the synchronization symbol on the specified symbol in the superframe based on the location information of the specified symbol in the superframe, calculate an error sample or a received signal, and send the error sample or the received signal to the network-side device.

In another embodiment, the indication information further includes the correspondence between the dynamic synchronization symbol and the pilot sequence.

The correspondence is that at least one pilot sequence corresponding to the location information of the dynamic synchronization symbol is modulated on the dynamic synchronization symbol.

A location of the dynamic synchronization symbol is a location of the dynamic synchronization symbol in the superframe.

In another embodiment, the processing module 1002 is further specifically configured to:

if the information about the dynamic synchronization symbol in the superframe indicates that the specified symbol is used as a synchronization symbol, modulate the pilot sequence based on the location information of the specified symbol in the superframe and the correspondence between the dynamic synchronization symbol and the pilot sequence.

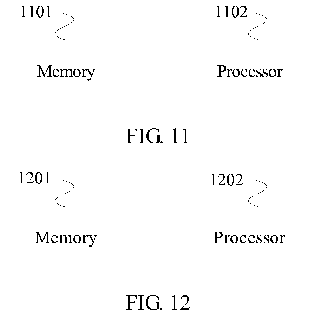

FIG. 11 is a physical block diagram of a network-side device in Embodiment 1 according to an embodiment of the present invention. As shown in FIG. 11, the network-side device includes:

a memory 1101 and a processor 1102.

The memory 1101 is configured to store a program instruction. The processor 1102 is configured to invoke the program instruction in the memory 1101 to implement functions of the network-side device in the foregoing method embodiments.

FIG. 12 is a physical block diagram of customer premises equipment in Embodiment 1 according to an embodiment of the present invention. As shown in FIG. 12, the customer premises equipment includes:

a memory 1201 and a processor 1202.

The memory 1201 is configured to store a program instruction. The processor 1202 is configured to invoke the program instruction in the memory 1201 to implement functions of the network-side device in the foregoing method embodiments.

Persons of ordinary skill in the art may understand that all or some of the steps of the method embodiments may be implemented by a program instructing related hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the embodiments of the present invention, but not for limiting the present invention. Although the embodiments of the present invention are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A signal processing method, comprising:

   determining, by a network-side device in a line initialization phase, information about a dynamic synchronization symbol in a superframe, wherein the dynamic synchronization symbol is a specified symbol in the superframe, and the information about the dynamic synchronization symbol comprises location information of the specified symbol in the superframe and indication information about whether the specified symbol is used as a synchronization symbol or a data symbol; and
   sending, by the network-side device, a first indication message to customer premises equipment CPE, wherein the first indication message comprises the information about the dynamic synchronization symbol in the superframe.

2. The method according to claim 1, further comprising: sending, by the network-side device, a second indication message to the CPE after updating the information about the dynamic synchronization symbol, wherein the second indication message comprises updated information about the dynamic synchronization symbol, and the updating the information about the dynamic synchronization symbol comprises updating the location information and/or the indication information.

3. The method according to claim 1 or 2, further comprising:
   determining, by the network-side device, a correspondence between the dynamic synchronization symbol and a pilot sequence, wherein the correspondence is used to indicate a pilot sequence modulated on the dynamic synchronization symbol, or the correspondence is used to indicate a bit in a pilot sequence modulated on the dynamic synchronization symbol.

4. The method according to claim 3, wherein the correspondence between the dynamic synchronization symbol and the pilot sequence is that a bit corresponding to a number of the dynamic synchronization symbol is modulated on the dynamic synchronization symbol; and
   the number of the dynamic synchronization symbol is determined based on a number of a dynamic synchronization symbol in a previous superframe of the superframe to which the dynamic synchronization symbol belongs, the bit is a bit in the pilot sequence, and a number of the bit is a number of the bit in the pilot sequence.

5. The method according to claim 3, wherein the correspondence between the dynamic synchronization symbol and the pilot sequence is that at least one pilot sequence corresponding to the location information of the dynamic synchronization symbol is modulated on the dynamic synchronization symbol; and
a location of the dynamic synchronization symbol is a location of the dynamic synchronization symbol in the superframe.

6. The method according to claim 5, wherein the first indication information further comprises the correspondence between the dynamic synchronization symbol and the pilot sequence.

7. The method according to any one of claims 4 to 6, wherein the specified symbol comprises a symbol at a specific location of at least one subframe in the superframe.

8. The method according to any one of claims 1 to 7, wherein the network-side device sends the second indication message in the line initialization phase and/or a data transmission phase.

9. A signal processing method, comprising:

   receiving, by customer premises equipment CPE, an indication message sent by a network-side device, wherein the indication message comprises information about a dynamic synchronization symbol in a superframe, the dynamic synchronization symbol is a specified symbol in the superframe, and the information about the dynamic synchronization symbol comprises location information of the specified symbol in the superframe and indication information about whether the specified symbol is used as a synchronization symbol or a data symbol; and
   performing, by the CPE, information feedback or signal modulation based on the information about the dynamic synchronization symbol in the superframe.

10. The method according to claim 9, wherein the performing, by the CPE, information feedback or signal modulation based on the information about the dynamic synchronization symbol in the superframe comprises:
    if the information about the dynamic synchronization symbol in the superframe indicates that the specified symbol is used as a synchronization symbol, receiving, by the CPE, the synchronization symbol on the specified symbol in the superframe based on the location information of the specified symbol in the superframe, calculating an error sample or a received signal, and sending the error sample or the received signal to the network-side device.

11. The method according to claim 9, wherein the indication information further comprises a correspondence between the dynamic synchronization symbol and a pilot sequence;
    the correspondence is that at least one pilot sequence corresponding to the location information of the dynamic synchronization symbol is modulated on the dynamic synchronization symbol; and
    a location of the dynamic synchronization symbol is a location of the dynamic synchronization symbol in the superframe.

12. The method according to claim 11, wherein the performing, by the CPE, information feedback or signal modulation based on the information about the dynamic synchronization symbol in the superframe comprises:
    if the information about the dynamic synchronization symbol in the superframe indicates that the specified symbol is used as a synchronization symbol, modulating, by the CPE, the pilot sequence based on the location information of the specified symbol in the superframe and the correspondence between the dynamic synchronization symbol and the pilot sequence.

13. A network-side device, comprising:

    a processing module, configured to determine, in a line initialization phase, information about a dynamic synchronization symbol in a superframe, wherein the dynamic synchronization symbol is a specified symbol in the superframe, and the information about the dynamic synchronization symbol comprises location information of the specified symbol in the superframe and indication information about whether the specified symbol is used as a synchronization symbol or a data symbol; and
    a sending module, configured to send a first indication message to customer premises equipment CPE, wherein the first indication message comprises the information about the dynamic synchronization symbol in the superframe.

14. The network-side device according to claim 13, wherein the processing module is further configured to update the information about the dynamic synchronization symbol; and the sending module is further configured to: after the processing module updates the information about the dynamic synchronization symbol, send a second indication message to the CPE, wherein the second indication message comprises updated information about the dynamic synchronization symbol, and the updating the information about the dynamic synchronization symbol comprises updating the location information and/or the indication information.

**15.** The network-side device according to claim 13 or 14, wherein the processing module is further configured to determine a correspondence between the dynamic synchronization symbol and a pilot sequence, wherein the correspondence is used to indicate a pilot sequence modulated on the dynamic synchronization symbol, or the correspondence is used to indicate a bit in a pilot sequence modulated on the dynamic synchronization symbol.

**16.** The network-side device according to claim 15, wherein the correspondence between the dynamic synchronization symbol and the pilot sequence is that a bit corresponding to a number of the dynamic synchronization symbol is modulated on the dynamic synchronization symbol; and
the number of the dynamic synchronization symbol is determined based on a number of a dynamic synchronization symbol in a previous superframe of the superframe to which the dynamic synchronization symbol belongs, the bit is a bit in the pilot sequence, and a number of the bit is a number of the bit in the pilot sequence.

**17.** The network-side device according to claim 15, wherein the correspondence between the dynamic synchronization symbol and the pilot sequence is that at least one pilot sequence corresponding to the location information of the dynamic synchronization symbol is modulated on the dynamic synchronization symbol; and
a location of the dynamic synchronization symbol is a location of the dynamic synchronization symbol in the superframe.

**18.** The network-side device according to claim 17, wherein the first indication information further comprises the correspondence between the dynamic synchronization symbol and the pilot sequence.

**19.** The network-side device according to any one of claims 16 to 18, wherein the specified symbol comprises a symbol at a specific location of at least one subframe in the superframe.

**20.** The network-side device according to any one of claims 13 to 19, wherein the network-side device sends the second indication message in the line initialization phase and/or a data transmission phase.

**21.** Customer premises equipment, comprising:

a receiving module, configured to receive an indication message sent by a network-side device, wherein the indication message comprises information about a dynamic synchronization symbol in a superframe, the dynamic synchronization symbol is a specified symbol in the superframe, and the information about the dynamic synchronization symbol comprises location information of the specified symbol in the superframe and indication information about whether the specified symbol is used as a synchronization symbol or a data symbol; and
a processing module, configured to perform information feedback or signal modulation based on the information about the dynamic synchronization symbol in the superframe.

**22.** The customer premises equipment according to claim 21, wherein the processing module is specifically configured to:
if the information about the dynamic synchronization symbol in the superframe indicates that the specified symbol is used as a synchronization symbol, receive, by the CPE, the synchronization symbol on the specified symbol in the superframe based on the location information of the specified symbol in the superframe, calculate an error sample or a received signal, and send the error sample or the received signal to the network-side device.

**23.** The customer premises equipment according to claim 21, wherein the indication information further comprises a correspondence between the dynamic synchronization symbol and a pilot sequence;
the correspondence is that at least one pilot sequence corresponding to the location information of the dynamic synchronization symbol is modulated on the dynamic synchronization symbol; and
a location of the dynamic synchronization symbol is a location of the dynamic synchronization symbol in the superframe.

**24.** The customer premises equipment according to claim 23, wherein the processing module is further specifically configured to:
if the information about the dynamic synchronization symbol in the superframe indicates that the specified symbol is used as a synchronization symbol, modulate, by the CPE, the pilot sequence based on the location information of the specified symbol in the superframe and the correspondence between the dynamic synchronization symbol and the pilot sequence.

| Network-side device | Customer premises equipment |
|---|---|

FIG. 1

Network-side device

Customer premises equipment

S201. Determine, in a line initialization phase, information about a dynamic synchronization symbol in a superframe

S202. First indication message, including the information about the dynamic synchronization symbol in the superframe

S203. Send the superframe, and modulate a pilot sequence on the dynamic synchronization symbol in the superframe

S204. Receive the synchronization symbol at a location of a specified symbol based on the location information that is of the specified symbol in the superframe and that is indicated in the first indication information sent by the network-side device

Line initialization phase

S205. Calculate an error sample

S206. Send the error sample

S207. Calculate a channel and a cancellation coefficient based on the error sample

TO FIG. 2B

TO FIG. 2B

FIG. 2A

CONT.
FROM
FIG. 2A

CONT.
FROM
FIG. 2A

S208. Update the information
about the dynamic
synchronization symbol

S209. Second indication message,
including updated information
about the dynamic
synchronization symbol

S210. Send the superframe, and
modulate the pilot sequence on
the dynamic synchronization
symbol in the superframe

S211. Receive the synchronization
symbol at a location of the symbol
based on location information that
is of the updated dynamic
synchronization symbol in the
superframe and that is indicated in
the second indication information
sent by the network-side device,
calculate the error sample, and
return the error sample to the
network-side device

Showtime
phase

FIG. 2B

| Network-side device | | Customer premises equipment |
|---|---|---|

S301. Determine, in a line initialization phase, information about a dynamic synchronization symbol in a superframe

S302. First indication message, including the information about the dynamic synchronization symbol in the superframe

S303. Send the superframe, and modulate a pilot sequence on the dynamic synchronization symbol in the superframe

S304. Receive a synchronization symbol at a location of the symbol based on location information that is of the dynamic synchronization symbol in the superframe and that is indicated in the first indication information

S305. Calculate an error sample

S306. Calculate a channel and a cancellation coefficient based on the error sample

Line initialization phase

TO FIG. 3B

TO FIG. 3B

FIG. 3A

CONT.
FROM
FIG. 3A

CONT.
FROM
FIG. 3A

S307. Update the information about the dynamic synchronization symbol and/or information about a correspondence

S308. Second indication message, including updated information about the dynamic synchronization symbol and/or updated information about the correspondence

S309. Send the superframe, and modulate the pilot sequence on the dynamic synchronization symbol in the superframe

Showtime phase

S310. Receive a synchronization symbol at a location of the symbol based on location information that is of the updated dynamic synchronization symbol in the superframe and that is indicated in the second indication information

S311. Calculate the error sample

S312. Calculate the channel and the cancellation coefficient based on the error sample

FIG. 3B

256 256

Dynamic synchronization symbol

Fixed synchronization symbol

Fixed synchronization symbol

◨ Dynamic synchronization symbol

■ Fixed synchronization symbol

FIG. 4

P1 P2 P3 P4 P0 P1 P2 P3 P4 P0

256 256

Dynamic synchronization symbol

Fixed synchronization symbol

Fixed synchronization symbol

◨ Dynamic synchronization symbol

■ Fixed synchronization symbol

FIG. 5

64 | 64 | 64 | 64 | 64 | 64 | 64 | 64

256 | 256

Dynamic
synchronization
symbol

Fixed
synchronization
symbol

Fixed
synchronization
symbol

▨ Dynamic synchronization symbol

■ Fixed synchronization symbol

FIG. 6

P1 | P2 | P3 | P4 P0 | P1 | P2 | P3 | P4 P0

256 | 256

Dynamic
synchronization
symbol

Fixed
synchronization
symbol

Fixed
synchronization
symbol

▨ Dynamic synchronization symbol

■ Fixed synchronization symbol

FIG. 7

P1 P2 P3 P0 P1 P2 P3 P0

256 256

Dynamic
synchronization
symbol

Fixed
synchronization
symbol

Fixed
synchronization
symbol

Dynamic synchronization symbol

Fixed synchronization symbol

FIG. 8

901

Processing
module

902

Sending
module

FIG. 9

1001

Receiving
module

1002

Processing
module

FIG. 10

1101

| Memory |

1102

| Processor |

FIG. 11

1201

| Memory |

1202

| Processor |

FIG. 12

# INTERNATIONAL SEARCH REPORT

| | International application No. |
|---|---|
| | PCT/CN2016/113599 |

**A. CLASSIFICATION OF SUBJECT MATTER**

H04L 25/08 (2006.01) i

According to International Patent Classification (IPC) or to both national classification and IPC

**B. FIELDS SEARCHED**

Minimum documentation searched (classification system followed by classification symbols)

H04L; H04B; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: 串音，干扰，串扰，同步，符号，导频，额外，增加，动态，指示，矢量化，远端串扰, crosstalk, interference, sync, symbol, pilot, additional, add, dynamic, indicator, vectoring, far-end crosstalk, FEXT

**C. DOCUMENTS CONSIDERED TO BE RELEVANT**

| Category* | Citation of document, with indication, where appropriate, of the relevant passages | Relevant to claim No. |
|---|---|---|
| A | EP 2876817 A1 (HUAWEI TECHNOLOGIES CO., LTD.) 27 May 2015 (27.05.2015), description, paragraph [0002] | 1-24 |
| A | CN 103190127 A (ALCATEL LUCENT, INC.) 03 July 2013 (03.07.2013), entire document | 1-24 |
| A | US 2016094273 A1 (FUTUREWEI TECHNOLOGIES, INC.) 31 March 2016 (31.03.2016), entire document | 1-24 |
| A | CN 104254977 A (HUAWEI TECHNOLOGIES CO., LTD.) 31 December 2014 (31.12.2014), entire document | 1-24 |
| A | US 2010034249 A1 (INFINEON TECHNOLOGIES AG.) 11 February 2010 (11.02.2010), entire document | 1-24 |

☐ Further documents are listed in the continuation of Box C.　　☒ See patent family annex.

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 September 2017 | 11 October 2017 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHANG, Dezhen Telephone No. (86-10) 62413366 |

Form PCT/ISA /210 (second sheet) (July 2009)

## INTERNATIONAL SEARCH REPORT
### Information on patent family members

International application No.

PCT/CN2016/113599

| Patent Documents referred in the Report | Publication Date | Patent Family | Publication Date |
|---|---|---|---|
| EP 2876817 A1 | 27 May 2015 | US 2015163350 A1 | 11 June 2015 |
| | | WO 2014032260 A1 | 06 March 2014 |
| | | CN 103828251 A | 28 May 2014 |
| CN 103190127 A | 03 July 2013 | US 2012106605 A1 | 03 May 2012 |
| | | EP 2633658 A1 | 04 September 2013 |
| | | KR 20130093128 A | 21 August 2013 |
| | | JP 2013543340 A | 28 November 2013 |
| | | WO 2012057954 A1 | 03 May 2012 |
| US 2016094273 A1 | 31 March 2016 | WO 2016045604 A1 | 31 March 2016 |
| CN 104254977 A | 31 December 2014 | WO 2014153726 A1 | 02 October 2014 |
| US 2010034249 A1 | 11 February 2010 | None | |

Form PCT/ISA /210 (patent family annex) (July 2009)